# EUROPEAN PATENT APPLICATION

(11) **EP 4 502 720 A1**
(43) Date of publication of application: **05.02.2025**
(21) Application number: 23775206.8
(22) Date of filing: 09.03.2023
(51) Int. Cl.: G02F 1/1335, G02F 1/1339, G02B 1/14, G02B 5/30, G02F 1/137, B32B 7/023, B60J 3/04, G06F 1/16, E06B 9/24, E06B 3/67

(54) **TRANSMITTANCE-VARIABLE OPTICAL LAMINATE AND MANUFACTURING METHOD THEREFOR, AND SMART WINDOW COMPRISING SAME**

(30) Priority: 24.03.2022 KR 20220036704
(71) Applicant: Dongwoo Fine-Chem Co., Ltd., Iksan-si, Jeollabuk-do 54631 (KR)
(72) Inventor: AHN, Hong-Jun, Iksan-si, Jeollabuk-do 54631 (KR); OH, Pyoung-Yun, Iksan-si, Jeollabuk-do 54631 (KR)
(74) Representative: Betten & Resch
(86) International application number: PCT/KR2023/003267
(87) International publication number: WO 2023/182708

(57) **Abstract**

The present invention relates to a transmittance-variable optical laminate and a manufacturing method therefor, and a smart window comprising same, the laminate comprising: a liquid crystal layer containing a sealant; a first polarization plate including a first functional coating layer and disposed on one surface of the liquid crystal layer; a second polarization plate including a second functional coating layer and disposed on the other surface of the liquid crystal layer; a first transparent conductive layer formed between the first polarization plate and the liquid crystal layer; and a second transparent conductive layer formed between the second polarization plate and the liquid crystal layer, wherein at least one transparent conductive layer of the first transparent conductive layer and the second transparent conductive layer is formed in direct contact with any one of the first polarization plate and the second polarization plate; the first functional coating layer and the second functional coating layer each have a surface pencil hardness of 3B to 8H; and the sum of the thicknesses of the first functional coating layer and the second functional coating layer is 2 to 50 µm.

## Description

### Technical Field

The present disclosure relates to a variable transmittance optical stack, a method for manufacturing the same, and a smart window including the same.

### Background Art

In general, there are many cases in which an external light-blocking coating is applied to a window of a means of transportation such as a vehicle. However, the transmittance of a conventional window of a means of transportation is fixed, and the transmittance of the external light-blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Furthermore, there are cases where an exterior light-blocking coating is used for home windows and doors. In this case, as in the case of the window of the above-mentioned means of transportation, the transmittance thereof is fixed, so it is not easy to control the amount of light coming in the room. Accordingly, a variable transmittance optical stack capable of changing the transmittance of light when a voltage is applied has been developed.

The variable transmittance optical stack is driven by changing the transmittance by driving liquid crystals according to voltage application. The variable transmittance optical stack developed so far is manufactured by forming a conductive layer for driving liquid crystals on a separate or additional substrate, and then coupling the conductive layer with other elements such as a polarizing plate. When necessary, the optical stack may further include an insulating layer.

In Korean Patent No. 10-2226630, with respect to a light control film, etc., which can be used for an electronic blind controlling the transmission of extraneous light, a light control film in which a spacer has a Vickers hardness value Xs of 16.9 to 40.2 and a second stack has a Vickers hardness value Xf of 11.8 to 35.9, is provided. However, a member corresponding to the sealant is not suitable for supporting the liquid crystal layer. Eventually, problems of light leakage occurring in an optical stack and a smart window including the same or defects occurring in the optical stack such as cracks or scratches cannot be resolved.

Therefore, there is a need to develop a variable transmittance optical stack that can simplify the manufacturing process by not including a separate or additional substrate layer for forming a conductive layer and can maintain an in-plane optical color constant and minimize liquid crystal defects by securing the height of the sealant equal to the height of a liquid crystal.

### Disclosure

### Technical Problem

The present disclosure is intended to provide a variable transmittance optical stack having a simplified manufactured process without a separate or additional substrate for forming a conductive layer.

Another objective of the present disclosure is to provide a variable transmittance optical stack having a functional coating layer included in a polarizing plate with surface hardness ranging from 3B to 8H and the sum of thickness of each functional coating layer ranging from 2 to 50µm.

Yet another objective of the present disclosure is to provide a variable transmittance optical stack including a sealant with a thickness after curing ranging from 2 to 20µm.

Still another objective of the present disclosure is to provide a variable transmittance optical stack having a liquid crystal layer with a height substantially equal to a height of a sealant.

Still another objective of the present disclosure is to provide a variable transmittance optical stack including a functional coating layer that can improve surface hardness, thereby minimizing cracks occurring in a manufacturing process.

Steel another objective of the present disclosure is to provide a smart window including the variable transmittance optical stack, and a vehicle or windows and doors for a building to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a liquid crystal layer a sealant; a first polarizing plate comprising a first functional coating layer and located on one surface of the liquid crystal layer; a second polarizing plate comprising a second functional coating layer and located on the other surface of the liquid crystal layer; a first transparent conductive layer provided between the first polarizing plate and the liquid crystal layer; and a second transparent conductive layer provided between the second polarizing plate and the liquid crystal layer, wherein at least one of the first transparent conductive layer and the second transparent conductive layer may be formed in direct contact with one of the first polarizing plate and the second polarizing plate, the first functional coating layer and the second functional coating layer may have surface pencil hardness ranging from 3B to 8H, and sum of thickness of the first functional coating layer and the second functional coating layer may range from 2 to 50µm.

In a first aspect of the present disclosure, a height of the sealant after curing ranges from 2 to 20µm.

In a second aspect of the present disclosure, a thickness of the first functional coating layer and a thickness of the second functional coating layer may range from 1 to 35µm.

In a third aspect of the present disclosure, each of the first functional coating layer and the second functional coating layer may include at least one of the hard coating layer and a low refractive index layer.

In a fourth aspect of the present disclosure, the hard coating layer may include acrylate-based compounds or epoxy-based compounds.

In a fifth aspect of the present disclosure, the low refractive index layer may include one or more types selected from a group consisting of SiO₂, Al₂O₃, MgF₂, CaF₂, and cryolite.

In a sixth aspect of the present disclosure, at least one of the first transparent conductive layer and the second transparent conductive layer may be formed in direct contact with one of the first polarizing plate and the second polarizing plate without a separate or additional substrate between the transparent conductive layer and the polarizing plate.

In a seventh aspect of the present disclosure, at least one of the first transparent conductive layer and the second transparent conductive layer may be formed in direct contact with one of the first polarizing plate and the second polarizing plate with a highly adhesive layer between the transparent conductive layer and the polarizing plate.

In an eighth aspect of the present disclosure, at least one of the first transparent conductive layer and the second transparent conductive layer may include one or more types selected from a group consisting of a transparent conductive oxide, metal, carbonaceous material, conductive polymer, conductive ink, and nanowires.

In a ninth aspect of the present disclosure, at least one of the first polarizing plate and the second polarizing plate may include one or more types selected from a group consisting of a protective layer, a retardation matching layer, and a refractive index-matching layer.

In a tenth aspect of the present disclosure, at least one of the first polarizing plate and the second polarizing plate may have a thickness ranging from 30 to 200µm.

In an eleventh aspect of the present disclosure, the liquid crystal layer may include one or more types of spacers selected from a group consisting of a ball spacer and a column spacer.

In a twelfth aspect of the present disclosure, wherein the spacer may have a height ranging from 2 to 20µm.

In a thirteenth aspect of the present disclosure, an occupancy area of the spacer in the liquid crystal layer may range from 0.01% to 10% of the area of the liquid crystal layer.

In a fourteenth aspect of the present disclosure, the variable transmittance optical stack may further include: one or more types selected from a group consisting of a pressure-sensitive adhesive/adhesive layer, an ultraviolet ray absorption layer, and an impact resistance layer.

Furthermore, the present disclosure relates to a method for manufacturing the variable transmittance optical stack.

Furthermore, the present disclosure relates to a smart window comprising the variable transmittance optical stack.

Furthermore, the present disclosure relates to a transportation means including the smart window.

Furthermore, the present disclosure relates to a vehicle in which the smart window is applied to at least one of a front window, a rear window, a side window, a sunroof window, and an inner partition thereof.

Furthermore, the present disclosure relates to a wearable device including the smart window.

Furthermore, the present disclosure relates to windows and doors for a building, the windows and doors comprising the smart window.

### Advantageous Effects

The variable transmittance optical stack of the present disclosure has the polarizing plate in which as the hardness of the hard coating layer thereof, i.e., the functional coating layer satisfies the range from 3B to 8H and the sum of the thickness of the first polarizing plate and the thickness of the second polarizing plate ranges from 2 to 50µm. Therefore, the height of the sealant is secured at 2 to 20µm to make the height of the sealant equal to the thickness of the liquid crystal to improve the pressing phenomenon and spreading property of the sealant, and light leakage between the liquid crystal layer and other substrates is prevented to maintain an in-plane optical color constant.

The variable transmittance optical stack according to the present disclosure has no cracks, has excellent durability, and can minimize defects of the smart window.

The variable transmittance optical stack according to the present disclosure is formed while omitting the process in which a conductive layer is formed on a substrate and then joined to other members to manufacture the conventional optical stack, so the manufacturing process of the present disclosure can be simplified compared to the conventional optical stack.

The variable transmittance optical stack according to the present disclosure is formed without a separate or additional substrate for forming a conductive layer as the conductive layer is directly formed on one surface of the polarizing plate, so that the thickness thereof can be significantly reduced compared to the thickness of the conventional optical stack.

The variable transmittance optical stack according to the present disclosure is formed without a separate or additional substrate for forming a conductive layer as the conductive layer is directly formed on one surface of the polarizing plate, so that a transmittance in the light transmissive mode can be improved compared to the conventional optical stack.

The variable transmittance optical stack according to the present disclosure includes a functional coating layer that can improve the surface hardness so that cracks occurring in the manufacturing process can be minimized compared to a conventional optical stack.

### Description of Drawings

FIG. 1 is a view showing a stack structure of a variable transmittance optical stack according to an embodiment of the present disclosure.
FIG. 2 is a view showing a stack structure of the variable transmittance optical stack according to another embodiment of the present disclosure.
FIG. 3 is a view showing a stack structure of a smart window for a vehicle according to an embodiment of the present disclosure.
FIG. 4 is a view showing a stack structure of a smart window for windows and doors for a building according to an embodiment of the present disclosure.
FIG. 5 is a view showing a stack structure of the smart window for windows and doors for a building according to another embodiment of the present disclosure.

The reference numerals in the drawings indicate components as follows.
100-1 and 100-2: polarizing plate
110-1 and 110-2: polarizer
120-1 and 120-2: functional coating layer
200-1 and 200-2: transparent conductive layer
300: transmittance matching layer
400-1 and 400-2: alignment film
500: sealant
600: pressure-sensitive adhesive/adhesive layer
700: glass for vehicle
800: glass for window and door

### Best Mode

The present disclosure relates to a variable transmittance optical stack that can minimize cracks occurring during a manufacturing process, and form a height of a liquid crystal layer and a height of the sealant substantially the same by enabling a sealant to be formed with a height less than or equal to 20µm.

More specifically, the present disclosure relates to a variable transmittance optical stack, the variable transmittance optical stack including: a liquid crystal layer a sealant; a first polarizing plate including a first functional coating layer and located on one surface of the liquid crystal layer; a second polarizing plate including a second functional coating layer and located on the other surface of the liquid crystal layer; a first transparent conductive layer provided between the first polarizing plate and the liquid crystal layer; and a second transparent conductive layer provided between the second polarizing plate and the liquid crystal layer, wherein at least one of the first transparent conductive layer and the second transparent conductive layer is formed in direct contact with one of the first polarizing plate and the second polarizing plate, the first functional coating layer and the second functional coating layer have surface pencil hardness ranging from 3B to 8H, and sum of thickness of the first functional coating layer and the second functional coating layer ranges from 2 to 50µm.

The variable transmittance optical stack of the present disclosure is particularly suitable for technical fields where light transmittance can be changed in response to application of voltage and, for example, may be used for a smart window, etc. The smart window is an optical structure controlling the amount of light or heat passing through the window by changing light transmittance in response to an electrical signal. In other words, the smart window is provided to be changed into a transparent, opaque, or translucent state by voltage and is called variable transmittance glass, lighting control glass, or smart glass. The smart window may be used as partitions for partitioning an internal space of vehicles and buildings or for protecting privacy, or as skylights arranged in openings of buildings. Furthermore, the smart window may be used as highway signs, noticeboards, scoreboards, clocks or advertising screens and may be used to replace windows of a means of transportation, such as cars, buses, aircrafts, ships, or trains, or glass of a means of transportation such as sunroof windows. The variable transmittance optical stack of the present disclosure may also be used for the smart window of the various technical fields mentioned above. However, since the conductive layer is directly formed on the polarizing plate, there is no need to include a separate or additional substrate for forming the conductive layer, and the thickness of the stack is thin and it is advantageous in the flexuosity, so the optical stack of the present disclosure may be used to be particularly suitable for the smart window of a vehicle or a building. According to one or a plurality of embodiments, the smart window to which the variable transmittance optical stack of the present disclosure is applied may be used for front windows, rear windows, side windows, and/or sunroof windows of a vehicle, windows and doors for a building, etc., and the smart window may be used to not only an external light blocking use, but also an internal space partitioning use or a privacy protection use such as an inner partition for a vehicle or a building, and may be used in wearable devices such as helmets, glasses, watches, etc.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings. Terms used in this specification are selected to describe embodiments and thus do not limit the present disclosure.

In this specification, an element expressed in a singular form may be plural elements unless it is necessarily singular in the context For example, "a polarizing plate" used in the specification may mean at least one of a first polarizing plate and a second polarizing plate, "a transparent conductive layer" may mean at least one of a first transparent conductive layer and a second transparent conductive layer, and "a functional coating layer" may mean at least one of a first functional coating layer and a second functional coating layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment. The "planar direction" used in this specification may be construed as a direction perpendicular to a polarizing plate and/or a transparent conductive layer, i.e., a direction viewed from the user's view side.

As used herein, "substantially" may be interpreted to include not only being physically completely identical, but also within an error range of measurement or manufacturing process, for example, may be interpreted as having an error range of 0.1% or less.

### <Variable transmittance optical stack and method for manufacturing same>

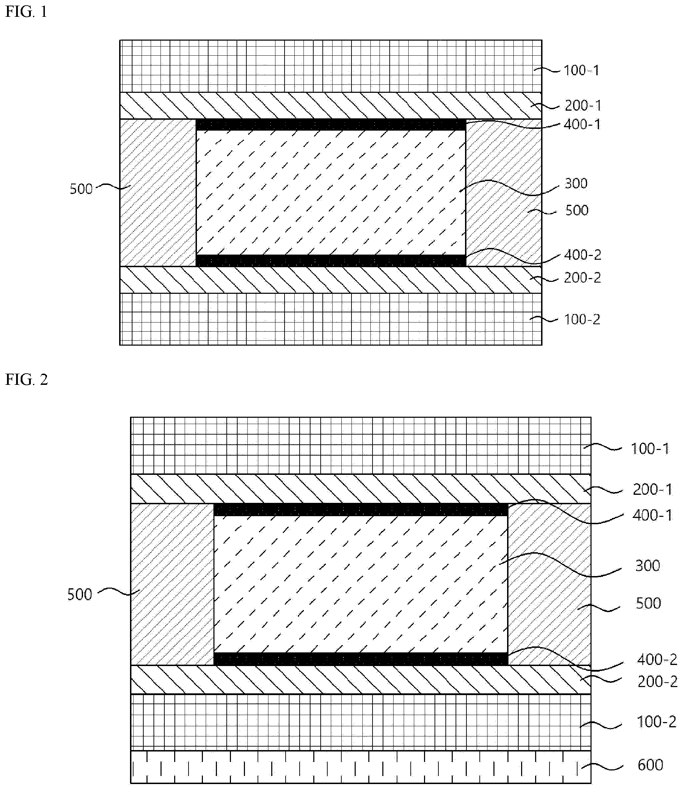

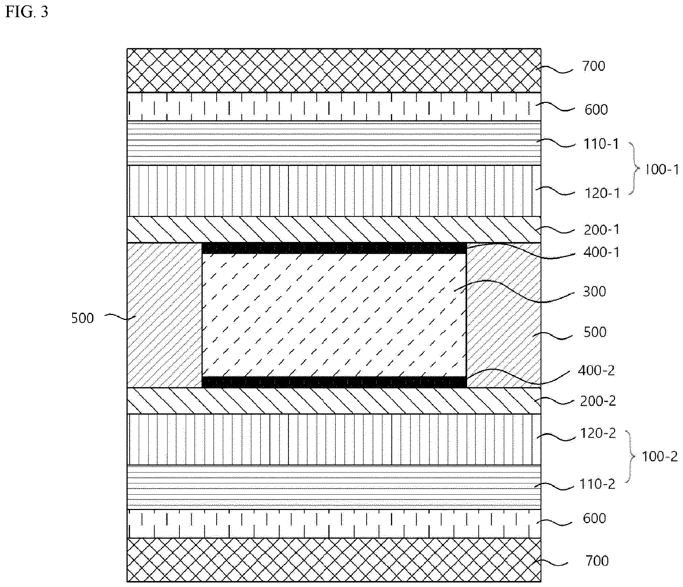

Referring to FIG. 1, according to the embodiment of the present disclosure, the variable transmittance optical stack may include, a first polarizing plate 100-1, a second polarizing plate 100-2, a first transparent conductive layer 200-1, a second transparent conductive layer 200-2, and a liquid crystal layer. The liquid crystal layer may include a transmittance matching layer 300, an alignment film 400, and a sealant 500. Furthermore, referring to FIG. 2, the variable transmittance optical stack according to another embodiment of the present disclosure may further include a pressure-sensitive adhesive/adhesive layer 600 on the outermost surface of the stack. More specifically, referring to FIGS. 3 to 5, each of the first polarizing plate 100-1 and the second polarizing plate 100-2 may include a polarizer 110 and one or more functional coating layers 120 for improving the surface hardness of each polarizing plate. According to one or a plurality of embodiments, each of the first polarizing plate 100-1 and the second polarizing plate 100-2 may include a pressure-sensitive adhesive/adhesive layer 600 and glass 700 and 800.

### Polarizing plate

The first polarizing plate 100-1 and the second polarizing plate 100-2 may be referred to as the polarizing plate 100 in the specification. The polarizing plate 100 includes the polarizer 110 and the functional coating layer 120. According to one or a plurality of embodiments, the polarizing plate 100 may include a protective layer, a retardation matching layer, a refractive index-matching layer, etc.

### Polarizer

The polarizer 110 may use a polarizer currently developed or to be developed, and, for example, may use a stretched polarizer, a coated polarizer, etc.

According to an embodiment, the stretched polarizer may include, for example, a stretched polyvinyl alcohol (PVA)-based resin. The PVA-based resin may preferably be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, etc. may be used. Furthermore, the PVA-based resin may be a denatured resin, and for example, may be polyvinyl formal or polyvinyl acetal denatured into aldehyde.

According to some embodiments, the liquid crystal layer may be formed by applying a liquid crystal coating composition to one surface of a protective film. The liquid crystal coating composition may include reactive liquid crystal compounds, dichroic dyes, etc.

The reactive liquid crystal compound may include a reactive mesogen (RM) capable of exhibiting liquid crystallinity and a polymerizable terminal functional group, and may include a monomer molecule having liquid crystal phase after a crosslinking reaction by heat or light. When the reactive liquid crystal compound is polymerized by light or heat, a polymer network may be formed while maintaining liquid crystal alignment. Using the reactive liquid crystal compound may maintain optical anisotropy or permittivity properties of liquid crystal to form a polarizer in thin film form with improved mechanical and thermal stability.

The dichroic dyes are substances contained in the liquid crystal coating composition to impart the polarization characteristic and have properties in which absorbance in a direction of the long axis of a molecule and absorbance in a direction of the short axis are different. Non-restricted examples of the dichroic dyes may include acridine pigments, oxazine pigments, cyanin pigments, naphthalene pigments, azo pigments, anthraquinone pigments, etc. The above examples may be used alone or in combination with two or more.

The liquid crystal coating composition may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. The liquid crystal coating composition may contain leveling agents, a polymerization initiator, etc. within a range that does not deteriorate the polarization characteristics of a coating film.

### Functional coating layer

Referring to FIGS. 3 to 5, the functional coating layer 120 may be provided to improve the hardness of the polarizing plate 100.

In general, an optical stack included in a smart window tends to have higher transmittance or lower driving voltage as the height of the liquid crystal layer is reduced. Therefore, lowering the thickness of the liquid crystal layer, preferably, forming the thickness of the liquid crystal layer equal to or less than 20µm, is advantageous for suppressing light leakage and improving the reliability. However, after the sealant is applied in the manufacturing process of the optical stack, in a bonding process of the upper and lower stacks, the height of the sealant is not reduced to 20µm or less due to pressing of a substrate surface of each stack by the sealant, and the height of the liquid crystal layer adjacent to the sealant is greater than 20µm, so there are problems of light leakage occurrence or reliability deterioration. Furthermore, when the thickness of the sealant is reduced by lowering the viscosity of a sealant material to solve the problems, there are problems such as difficulty maintaining uniformity of a sealant line, adhesion deterioration, and liquid crystal contamination occurring inwards of the sealant.

Accordingly, in order to solve the conventional technical problems, the present disclosure has a technical characteristic in which the functional coating layer is included to impart a predetermined hardness to a polarizing plate so that the pressing phenomenon of a substrate surface in the process of applying sealant and bonding is suppressed and the thickness of the sealant is formed to 20µm or less. As described above, as the thickness of the sealant is formed to 20µm or less, the sealant and the liquid crystal layer are formed to have a substantially equal thickness, and light leakage in a liquid crystal region adjacent to the sealant can be efficiently suppressed, and spacer reliability can be improved.

The functional coating layer is not particularly limited as long as it can impart a predetermined hardness to the polarizing plate to improve the above-described mechanical problem, for example, the functional coating layer may include the hard coating layer and/or the low refractive index layer.

The hard coating layer may use a hard coating layer currently developed or to be developed. According to one or a plurality of embodiments, the hard coating layer may include acrylate-based or epoxy-based compounds, and may further include inorganic fine particles, photoinitiators, etc.

Acrylate-based compounds may include monomers or oligomers including (meth)acrylate groups, and the term used in this specification, "(meth)acryl-" is used to be referred to as "methacryl-", "acryl-", or both. As non-restricted examples of the acrylic compound, there may be neopentylglycoldiacrylate, 1,6-hexanediol(meth)acrylate, polypropyleneglycoldi(meth)acrylate, triethyleneglycoldi(meth)acrylate, dipropyleneglycoldi(meth)acrylate, polyethyleneglycoldi(meth)acrylate, polypropyleneglycoldi(meth)acrylate, trimethylolpropanetri(meth)acrylate, trimethylolethanetri(meth)acrylate, 1,2,4-cyclohexanetetra(meth)acrylate, pentaglycerolthri(meth)acrylate, pentaerythritoltetra(meth)acrylate, pentaerythritoltri(meth)acrylate, dipentaerythritoltri(meth)acrylate, dipentaerythritolpenta(meth)acrylate, dipentaerythritoltetra(meth)acrylate, dipentaerythritolhexa(meth)acrylate, tripentaerythritoltri(meth)acrylate, tripentaerythritolhexatri(meth)acrylate, bis(2-hydroxyethyl)isocyanuratedi(meth)acrylate, hydroxyethyl(meth)acrylate, hydroxypropyl(meth)acrylate, hydroxybutyl(meth)acrylate, isooctyl(meth)acrylate, iso-dexil(meth)acrylate, stearyl(meth)acrylate, tetrahydrofurfuryl(meth)acrylate, phenoxyethyl(meth)acrylate, or isoboneol(meth)acrylate. The above examples may be used alone or in combination with two or more. The above-mentioned acrylate-based compounds may include epoxy(meth)acrylate compounds and/or urethane(meth)acrylate compounds

Furthermore, the epoxy-based compounds may include monomers or oligomers including at least one epoxy group in a molecule. The epoxy group may be a substitution epoxy group. Carbon atoms of a substitution loop included in the epoxy group may be 3 to 7. For example, the epoxy group may be a substitution epoxy group (cyclohexylepoxy) including a cyclohexane loop. The substitution loop may have a substituent. For example, the substitution loop may include an alkyl substituent of 1 to 20 carbon atoms. When carbon atoms of the alkyl substituent exceed 20, it may be disadvantageous in terms of curing speed. The alkyl substituent includes a linear or branched type, and the branched type alkyl substituent may have 3 carbon atoms.

According to the embodiment of the present disclosure, in a method of manufacturing the hard coating film, the hard coating compositions may include inorganic fine particles. According to the embodiment of the present disclosure, the inorganic fine particles may be inorganic fine particles with nanoscale particle size, e.g., may use nano fine particles with a particle size of approximately 100nm or less, preferably, 10 to 100nm, more preferably, 10 to 50nm. Furthermore, the inorganic fine particles may be, for example, silica fine particles, aluminum oxide particles, titanium oxide particles, zinc oxide particles, or the like. The hardness of the hard coating layer can be improved by adding the inorganic fine particles. According to the embodiment of the present disclosure, the inorganic fine particles may be included as approximately 10 to 60 parts by weight, preferably, as 20 to 50 parts by weight to the total weight of the hard coating compositions. By including the inorganic fine particles as the above-described range, the effect of improving the hardness of the hard coating film due to the addition of the inorganic fine particles can be achieved within the range that does not deteriorate the physical properties of the hard coating compositions.

According to the embodiment of the present disclosure, in a method of manufacturing the hard coating film, the photoinitiators may include inorganic fine particles. According to the embodiment of the present disclosure, the optical initiator may be 1-hydroxy-cyclohexyl-phenyl ketone, 2-hydroxy-2-methyl-1-phenyl-1-propanone, 2-hydroxy-1-[4-(2-hydroxyethoxy)phenyl]-2-methyl-1-propanone, methylbenzoylformate, α,α-dimethoxy-α-phenylacetophenone, 2-benzoyl-2-(dimethylamino)-1-[4-(4-morpholineyl)phenyl]-1-butanone, 2-methyl-1-[4-(methylthio)phenyl]-2-(4-morpholineyl)-1-propanone diphenyl(2,4,6-trimethylbenzoyl)-phosphineoxide, or bis(2,4,6-trimethylbenzoyl)-phenylphosphineoxide, etc., but is not limited thereto. Furthermore, currently available products of the photoinitiators may include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc. Each photoinitiator may be used alone or two or more types may be mixed.

According to the embodiment of the present disclosure, the photoinitiator may be included as approximately 0.5 to 10 parts by weight, preferably, as 1 to 5 parts by weight to the total weight of the hard coating compositions. When the photoinitiators are within the above range, sufficient cross-linking photopolymerization can be achieved without deteriorating physical properties of the hard coating film.

Meanwhile, in the method for manufacturing the hard coating film, the hard coating composition may further include additives commonly used in the technical field to which the present disclosure belongs, such as a surfactant, a yellowing inhibitor, a leveling agent, an antifouling agent, etc. Furthermore, the content thereof may be variously adjusted within a range that does not deteriorate the physical properties of the hard coating composition according to the present disclosure, and is not particularly limited.

The low refractive index layer may be provided to also improve the hardness of the polarizing plate within a range that does not impair the objectives of the present disclosure. The low refractive index layer, for example, may include one or more of low refractive index agents selected from a group consisting of SiO₂, Al₂O₃, MgF₂, CaF, cryloite, etc., and in some embodiments, may include compounds and/or resins used in the hard coating layer.

The hard coating layer and the low refractive index layer may be used alone respectively, and in some embodiments, may be used as a multiple-layered structure. As shown in FIGS. 3 to 5, the functional coating layer 120 may be formed in direct contact with one surface of the polarizer 110, but is not limited thereto. For example, when the polarizing plate includes a retardation matching layer and/or a refractive index-matching layer, the functional coating layer is formed on one surface of the retardation matching layer and/or the refractive index-matching layer to be described below. Therefore, the functional coating layer, the retardation matching layer, the refractive index-matching layer, and the polarizer may be stacked in order. The functional coating layer 120 is preferably formed on a side of the polarizer 110 the side facing the liquid crystal layer, i.e., on an inner side of the polarizer. For example, a first functional coating layer 120-1 and a second functional coating layer 120-2 may be provided on an inner side of a first polarizer 110-1 and the second polarizer 110-2 and be arranged opposite to each other. In this case, the functional coating layer may impart the hardness to the polarizing plate at a level suitable for members such as the transparent conductive layer, etc. to be formed. Therefore, there is the advantages of minimizing cracks or scratches occurring in the manufacturing or treatment process of the optical stack and reducing the thickness of the sealant by efficiently suppressing the substrate surface pressing due to the sealant.

According to the embodiment, it is preferable that the surface pencil hardness of the functional coating layer 120 ranges from 3B to 8H. The surface pencil hardness may be obtained by using a pencil hardness tester (pencil hardness tester, Korea Sukbo Scientific Co.) such that a pencil is located on a surface of the functional coating layer at 45° and the pencil scratches the surface at a speed of 300mm/min by applying a load of 750g. The pencil is a product of Mitsubishi, tests are conducted 5 times per one type of pencil hardness, thermal treatment is performed for 10 minutes at 100°C, and the surface pencil hardness is used to determine whether scratches are visible with the naked eye. When the surface pencil hardness of the functional coating layer satisfies the above-described range, the functional layer may have not only excellent abrasion resistance but also bending resistance and durability of the optical stack can be further improved.

According to one or a plurality of embodiments, the thickness of the first functional coating layer 120-1 and the thickness of the second functional coating layer 120-2 may range from 1 to 35µm, preferably, from 5 to 25µm, and the sum of the thickness of the first functional coating layer 120-1 and the thickness of the second functional coating layer 120-2 may range from 2 to 50µm. The thickness may be a thickness after drying. When the sum of the thickness of the first functional coating layer 120-1 and the thickness of the second functional coating layer 120-2 satisfies the above range, the hard coating film in which the hardness is excellent, thinness is possible, and curling rarely occurs may be manufactured. Moreover, the substrate surface pressing by the sealant is efficiently suppressed, there is also an advantage in terms of being able to reduce the thickness of the sealant.

The functional coating layer may be applied with an appropriate method such as a die coater, air knife, reverse roll, spray, blade, casting, gravure, micro gravure, spin coating, etc.

### Protective layer

The protective layer may be provided to preserve the polarization characteristic of the polarizer from a post-processing and external environment and be implemented into a form such as a protective film, etc. The protective layer may be formed in direct contact with one surface or both surfaces of the polarizer, but is not limited thereto. For example, the protective layer may be used in a multiple-layered structure in which one or more protective layers are successively stacked and may be formed in direct contact with other members such as a retardation matching layer. According to one or a plurality of embodiments, the protective layer may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP). The thickness of the protective layer may range from 10 to 100µm, more preferably, from 20 to 80µm.

Furthermore, the protective layer may further include an ultraviolet ray absorbent on the outermost surface to prevent functional deterioration of the optical stack. The ultraviolet ray absorbent is not particularly limited as long as it is to prevent deterioration of the optical stack due to UV rays. For example, the ultraviolet ray absorbent may use salicylic acid-based ultraviolet absorber (phenyl salicylate, p-tert-butyl salicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

### Retardation matching layer

The retardation matching layer may be provided to complement the optical characteristics of the optical stack and may be implemented into a form of a retardation film, etc., and a retardation film currently developed or to be developed may be used therefor. For example, a quarter-wave plate (1/4 wave plate), a half-wave plate (1/2 wave plate), etc. may be used to delay the phase of light and may be used alone or in combination. The retardation matching layer may be formed in direct contact with one surface of the polarizer, but is not limited thereto. For example, the retardation matching layer may be formed in direct contact with one surface of the protective layer and formed in direct contact with one surface of the refractive index-matching layer.

The retardation matching layer may be a polymer stretched film or a liquid crystal polymerized film formed by stretching a polymer film that can impart optical anisotropy by stretching appropriately. According to an embodiment, the polymer stretched film may use a polymer layer containing polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers. A method for obtaining the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded. The polymer stretched film may be provided by performing uniaxial stretching with respect to the molded film in the mechanical direction (MD, longitudinal or length direction), and by performing uniaxial stretching in the direction (TD, transverse direction or width direction) perpendicular to the MD. Furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured. The liquid crystal polymerized film may contain a reactive liquid crystal compound in a polymerized state. The description of the reactive liquid crystal compound of the coated polarizer described above may be equally applied to the reactive liquid crystal compound. In one or a plurality of embodiments, when the retardation matching layer is a polymer stretched film, the thickness of the retardation matching layer may range from 10µm to 100µm. Preferably, the thickness thereof may range from 20µm to 80µm.

### Refractive index-matching layer

The refractive index-matching layer is provided to compensate for the refractive index difference of the optical stack by the transparent conductive layer 200 and may serve to improve the visible characteristic by reducing the difference of the refractive index. Furthermore, the refractive index-matching layer may be provided to correct a color based on the transparent conductive layer 200. Meanwhile, when the transparent conductive layer has a pattern, the refractive index-matching layer may compensate for a transmittance difference between a pattern region with the pattern and a non-pattern region without the pattern. Specifically, the transparent conductive layer 200 is stacked close to other members having a refractive index different therefrom (for example, the polarizer, etc.), and due to the difference of the refractive index between the transparent conductive layer and another layer close thereto, the difference of optical transmittance may be caused. Specifically, when the pattern is formed on the transparent conductive layer, there may be a problem in that the pattern region and the non-pattern region are visually distinguished from each other. Therefore, the refractive index-matching layer is included to compensate for a refractive index, thereby reducing the difference with the optical transmittance of the optical stack. Specifically, when the pattern is formed on the transparent conductive layer, the pattern region and the non-pattern region should be provided so as not to be visually distinguished. According to the embodiment, the refractive index of the refractive index-matching layer may be appropriately selected according to a material of another adjacent member, preferably, may range from 1.4 to 2.6, and more preferably, may range from 1.4 to 2.4. In this case, it is possible to prevent optical loss due to a sharp difference in the refractive index between other members such as the polarizer, etc. and the transparent conductive layer 200. The refractive index-matching layer is not particularly limited as long as it can prevent the sharp refractive difference between other members, such as the polarizer, and the transparent conductive layer 200, and may use a compound used in the formation of a refractive index-matching layer currently developed or to be developed. For example, the refractive index-matching layer 150 may be formed from the refractive index-matching layer formation composition containing a polymerizable isocyanate compound.

According to the embodiment, the polarizing plate 100 may include other configuration to assist or strengthen the characteristics of the polarizer in addition to the above-mentioned components and, for example, may include an overcoat layer, etc. to further improve the mechanical durability. According to one or a plurality of embodiments, the polarizing plate 100 may have a thickness ranging from 30 to 200µm, and preferably, a thickness ranging from 30 to 170µm, and more particularly, a thickness ranging from 50 to 150µm. In this case, while the polarizing plate 100 maintains the optical characteristic, the optical stack having a thin thickness can be manufactured.

### Transparent conductive layer

The transparent conductive layer 200 is provided to drive the liquid crystal layer and may be formed by in direct contact with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2. Conventionally, an optical stack used to manufacture a smart window, etc. is manufactured by forming a conductive layer for driving a liquid crystal on one surface of a substrate and bonding a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve a transmittance in a light transmissive mode and the curvature characteristic while reducing the entire thickness of the stack. According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed such that pre-processing such as corona processing or plasma processing is performed on one surface of each polarizing plate 100 and then the transparent conductive layer 200 is brought into direct contact with the surface of the polarizing plate 100 to which the pre-processing is performed The pre-processing is not limited to the corona processing or the plasma processing, and may be a pre-processing method currently developed or to be developed without harming the purpose of the present disclosure. According to another embodiment of the present disclosure, in order to improve the adhesion between the transparent conductive layer 200 and the polarizing plate 100, the transparent conductive layer 200 may be formed by directly contacting with each polarizing plate with the highly adhesive layer as a primer layer (not shown) located therebetween, the highly adhesive layer being provided on one surface of each polarizing plate 100. The transparent conductive layer 200 is preferably have the transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed later may be used. Furthermore, the conductive layer may be provided into a structure of two or more layers by combining the above-described substances. For example, the conductive layer may include a double-layered structure consisting of a metal layer and a transparent conducting oxide layer, thereby reducing a reflectivity of incident light and increasing a transmittance. A metal layer has a high reflectivity and can reduce the visibility of a screen when used alone. However, a transparent conductive oxide layer is stacked on the metal layer, thereby reducing the reflectivity and improving the transmittance.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), molybdenum (Mo), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), neodymium (Nd), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining the above-described substances in a structure of two or more layers. For example, in order to reduce a reflectivity of incident light and increase transmittance, the transparent conductive layer may be formed in a structure of two layers including a metal layer and a transparent conductive oxide. The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as an in-mold labeling (IML) injection method, chemical vapor deposition (CVD), physical vapor deposition (PVD), plasma enhanced chemical vapor deposition (PECVD), dry or wet plating process, etc.

### Liquid crystal layer

The liquid crystal layer may adjust the transmittance of light incident in one or a plurality of directions according to electric fields to change a driving mode of the optical stack. The liquid crystal layer may include the reactive liquid crystal compound in the transmittance matching layer 300 and may include the alignment film 400. For example, the liquid crystal layer may be located in a space provided by the sealant 500 between the first polarizing plate 100-1 and the second polarizing plate 100-2 and the spacer (not shown) in an optical control region. The liquid crystal compound is operated in response to electric fields and is not particularly limited as long as it can control the transmittance of light, and liquid crystal compounds currently developed or to be developed may be used. For example, the description of reactive liquid crystal compounds of the above-mentioned coated polarizer may be equally applied thereto. A liquid crystal operation method of the liquid crystal layer is not particularly limited. For example, the liquid crystal layer may be operated by a twisted nematic (TN) mode, a super twisted nematic (STN) mode, a vertical alignment (VA) mode, etc.

### Sealant

The sealant 500 may be located between the first polarizing plate 100-1 and the second polarizing plate 100-2 in an inactive region. The sealant may serve to couple the first polarizing plate and the second polarizing plate to each other, and with the spacer, may ensure a space in which the reactive liquid crystal compound is provided, between the first polarizing plate and the second polarizing plate.

The sealant 500 may include curable resins as base resins. As the base resins, UV curable resins or heat curable resins that are known to be usable for sealants in the art may be used. The ultraviolet curable resins may be polymers of UV curable monomers. The heat-curable resins may be polymers of heat-curable monomers. As the base resins of the sealant 340, for example, acrylate-based resins, epoxy-based resins, urethane-based resins, phenol-based resins, or compounds of these resins may be used. According to an embodiment, the base resins may be acrylate-based resins, and the acrylate-based resins may be polymers of acrylic monomers. For example, the acrylic monomers may be multifunctional acrylate. According to another embodiment, the sealant may contain monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may contain an initiator, for example, an optical initiator or a heat initiator. The sealant 500 may be formed in a method commonly used in the art. For example, the sealant 500 may be formed by drawing a sealant at an outer portion of the liquid crystal layer (i.e., inactivate region) with a dispenser having a nozzle.

Preferably, the height of the sealant after the curing is substantially the same as the height of the liquid crystal layer. For example, The height of the sealant may range from 2 to 20µm. In this case, as described above, light leakage in a region of the liquid crystal layer adjacent to the sealant does not occur, and the spacer reliability can be more improved.

### Spacer

The spacer (not shown) is to maintain a liquid crystal gap of the liquid crystal layer, and may include at least one spacer of a ball spacer and a column spacer, and specifically, it is preferable from the viewpoint of fairness that the spacer is a ball spacer. The spacer may include one spacer, and the spacer may preferably have the height ranging from 2 to 20µm to support the liquid crystal layer. Furthermore, when viewed in a planar direction, an occupancy area of the spacer in the liquid crystal layer preferably ranges from 0.01 to 10% of the area of the liquid crystal layer in terms of the user's visibility and the improvement of the transmittance in the light transmissive mode

### Other functional layer

The variable transmittance optical stack of the present disclosure may include other members without damaging the objectives of the present disclosure. For example, the variable transmittance optical stack of the present disclosure may include a pressure-sensitive adhesive/adhesive layer 600 (referring to FIGS. 2 to 5), and may include an ultraviolet ray absorption layer (not shown) and an impact resistance layer.

The pressure-sensitive adhesive/adhesive layer 600 may be formed using an adhesive or a pressure-sensitive adhesive, and have appropriate adhesion to prevent peeling, bubbles, etc. from occurring when handling the optical stack, and preferably have transparency and thermal stability, and may have a viscoelastic property that can be applied to the smart window. The adhesive may be an adhesive currently developed or to be developed, for example, may use photocurable adhesive. The photocurable adhesive provides strong adhesion by being crosslinked and cured by receiving active energy rays such as ultraviolet (UV), electron beam (EB), etc., and may be composed of reactive oligomers, reactive monomers, a photopolymerization initiator, and the like. The reactive oligomers are important components that determine the characteristics of adhesive, and form polymer binding by photopolymerization to form a cured film. The available oligomers may be polyester-based resin, polyether-based resin, polyurethane-based resin, epoxy-based resin, polyacryl-based resin, silicon-based resin, and the like. The reactive monomers may serve as crosslinker, diluent of the reactive oligomers described above, and affect adhesion characteristics. The available reactive monomers may be monofunctional monomers, multifunctional monomers, epoxy-based monomers, vinyl ethers, cyclic ethers, and the like. The photopolymerization initiator may absorb light energy to generate radicals or cations to initiate photopolymerization, and a proper type may be selected and used depending on photopolymerization resin. The pressure-sensitive adhesive may use a pressure-sensitive adhesive currently developed or to be developed. According to one or a plurality of embodiments, as the pressure-sensitive adhesive, acryl-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure-sensitive adhesive, polyacrylamide-based pressure-sensitive adhesive, cellulose-based pressure-sensitive adhesive, vinylalky ether-based pressure-sensitive adhesive and the like.

The pressure-sensitive adhesive is not particularly limited as long as it has pressure-sensitive adhesion and viscoelasticity. For ease of acquisition, preferably, the pressure-sensitive adhesive may include acryl-based pressure-sensitive adhesive, for example, may be (meth)acrylate copolymers, crosslinkers, solvents, and the like. The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds. The solvents may include common solvents used in the field of resin compositions. For example, the solvents may use solvents such as alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The pressure-sensitive adhesive/adhesive layer 600 may be appropriately determined depending on a type of resins serving as the pressure-sensitive adhesive/adhesive, the strength of the pressure-sensitive adhesive/adhesive, the environment where the pressure-sensitive adhesive/adhesive is used, and the like. According to the embodiment, with the pressure-sensitive adhesive/adhesive layer, in order to ensure sufficient pressure-sensitive adhesion/adhesion and minimize the thickness of the optical stack, the thickness in case of an adhesive layer may range from 0.1 to 500 µm, preferably, from 0.5 to 450µm, more preferably, 1 to 400µm, and the thickness in case of a pressure-sensitive adhesive layer may range from 2 to 30µm, preferably, from 3 to 20µm, more preferably, from 5 to 10µm. According to the embodiment, the pressure-sensitive adhesive/adhesive layer 600 may be formed on one surface or both surfaces of the polarizing plate by a laminate method or a vacuum bonding method.

The ultraviolet ray absorption layer (not shown) is not particularly limited as long as it is to prevent deterioration of the optical stack due to ultraviolet rays, and the contents of the ultraviolet ray absorbent described in the protective layer may be applied itself, and description thereof will be omitted.

The impact resistance layer (not shown) is located in an inward direction. The impact resistance layer is not particularly limited as long as when an impact is applied to a front surface of a window, it can relieve the impact, and prevent damage to internal substrates. Preferably, the impact resistance layer may use a material with high tolerance for strain energy, for example, thermoplastic resins with high toughness. The above-mentioned resin may be, for example, polycarbonate-based resin, polyimide-based resin, polyamide-based resin, polyamideimide-based resin, polyester-based resin, etc. Furthermore, since the present disclosure is intended to be used in a display device, it is preferable to use resins with excellent transmittance, more preferably, optically transparent resins.

### <Smart window>

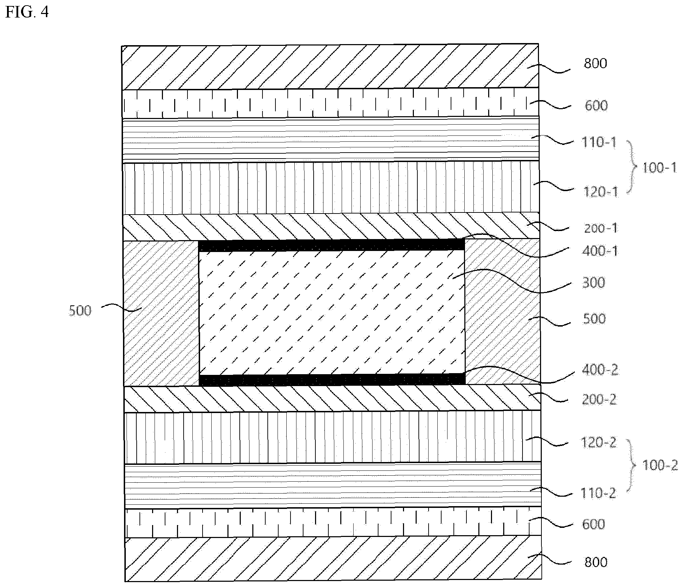

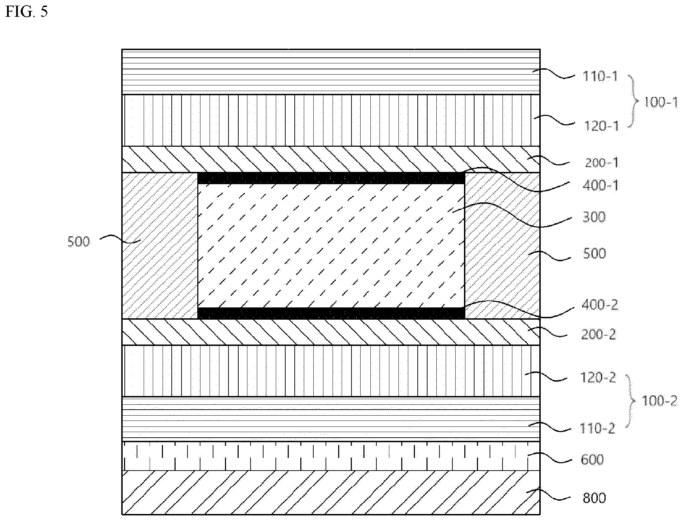

The present disclosure includes in addition to the variable transmittance optical stack, a smart window including the same, a vehicle in which the smart window is applied to at least one of front windows, rear windows, side windows, sunroof windows, and internal partitions, and windows and doors for a building including the smart window. For example, a vehicle including the smart window of the present disclosure may relate to a window in which a vehicle glass 700 is attached to both surfaces of the optical stack including the polarizing plate 100, the transparent conductive layer 200, the liquid crystal layer, and the pressure-sensitive adhesive/adhesive layer 600 (referring to FIG. 3). For example, the window of a vehicle may be formed by placing an adhesive film and a vehicle glass on both surfaces of the optical stack, then heating the stack by using a press machine at 90°C temperature and an approximately 1bar vacuum state for 10 to 20 minutes. The adhesive film may include an EVA film, a PVB film, etc. Furthermore, a building window and door (glass for windows and doors, 800) may be attached to both surfaces (referring to FIG. 4) or one surface (referring to FIG. 5) of the optical stack, and a smart window product for windows and doors having the same configuration as FIG. 4 or 5 may be formed by attaching the glass for windows and doors to both surfaces of the optical stack after applying a UV adhesive to the glass, then performing UV curing, and a smart window product for windows and doors having the same configuration as FIG. 4 or 5 may be manufactured by attaching the glass on one surface of the optical stack by the laminate method.

Otherwise, the smart window may be applied to means of transportation and wearable devices that may be generally used in the art.

### Mode for Invention

Hereinbelow, an embodiment of the present disclosure will be described in detail. However, the present disclosure may not be limited to embodiments disclosed below and may be implemented in various shapes, and the embodiments merely ensure that the present disclosure is complete and is provided to fully inform those skilled in the art of the scope of the invention, and may be defined by the scope of the claims.

### Manufacturing example 1: manufacturing of polarizing plate

### (1) Swelling treatment process

A polyvinylalcohol film (material film)(manufactured by Kurarey Company, product name "Kuraray Poval Film VF-PE # 6000", average polymerization degree 2400, saponification degree 99.9 mol%) of a thickens of 60µm is returned while continuing to unroll the film from the material roll, and the film is immersed in a swelling bath added with pure water of 20°C for 30 seconds. In the swelling treatment process, stretching (vertical uniaxial stretching) between rolls is performed with adding a difference in main speed between nip rolls. Stretching magnification based on the material film is preset at 2.5 times.

### (2) Dyeing treatment process

Next, the film passing through the nip rolls is immersed in a dyeing bath at 30°C with a mass ratio of pure water/potassium iodide/iodine/boracic acid of 100/2/0.01/0.3 for 120 seconds. Also in the dyeing process, stretching between rolls (vertical uniaxial stretching) is performed while adding a difference in main speed between the nip rolls. Stretching magnification based on the film after the swelling treatment process is preset at 1.1 times.

### (3) Crosslinking treatment process

Next, the film passing through the nip rolls is immersed in a first crosslinking bath at 56°C with a mass ratio of pure water/potassium iodide/boracic acid of 100/12/4 for 70 seconds. Stretching between rolls (vertical uniaxial stretching) is performed while adding a difference in main speed between a nip roll and another nip roll provided between the first crosslinking bath and a second crosslinking bath. Stretching magnification based on the film after the dyeing treatment process is preset at 1.9 times.

### (4) Complementary color treatment process

Next, the film after the crosslinking treatment process is immersed in the second crosslinking bath at 40°C with a mass ratio of potassium iodide/boracic acid/pure water of 9/2.9/100 for 10 seconds.

### (5) Cleaning treatment process

Next, the film after the second crosslinking treatment process is immersed in a cleaning bath added with pure water at 14°C for 5 seconds, and cleaning the film with a cleaning amount of 5m³/h and a cleaning temperature of 14°C.

### (6) Drying treatment process

Next, the polarizer film is produced by heating-drying the film at 80°C for 190 seconds by passing the film after the cleaning treatment process through a dry passage. A moisture rate after drying is 13.6%, and a thickness of the obtained polarizer film is about 21µm.

### (7) Bonding treatment process

Next, as the adhesive, a water-based adhesive is prepared by including 5 parts by weight of polyvinylalcohol-based resin to 100 parts by weight of water. Thereafter, the protective film is stacked on both surfaces of the polarizer film by using the prepared UV adhesive. The polarizing plate is produced by performing UV exposure to the obtained stack and curing the adhesive.

A thickness of the adhesive layer to the obtained polarizing plate is about 2µm.

### Manufacturing example 2: manufacturing of compositions HC1 for forming hard coating layer

The hard coating composition HC1 is prepared by mixing dendrimer compounds (Miwon Specialty Chemical Company, SP-1106) 16.2g, inorganic nanoparticles (Nissan Chemical Co., Ltd., MEK-AC-2140, solid content 40 weight %) 14.4g, multifunctional(meth)acrylate (Japanese explosive Co., DPEA126) 1.8g including an ethylene glycol group, photoinitiators (1-hydroxycyclohexylphenylketone) 0.7g, and methylethylketone 2.9g.

### Manufacturing example 3: manufacturing of compositions HC2 for forming hard coating layer

The hard coating composition HC2 is prepared by mixing multifunctional acrylate DPEA-12 including an ethylene glycol group (Japanese explosive Co.) 18 weight % and multifunctional urethane acrylate SOU-1700B including a cyclohexyl group (SIN-A T&C Co., Ltd.) 12 weight % and silica inorganic nanoparticle NANOPOL^{®} C 784 (normal butyl acetate 50% dilution, 20nm, Evonik) 20 weight %, IRGACURE^{®} 184(BASF Corporation) 1.8 weight %, BYK-333(BYK-Chemie) 0.2 weight %, methyl ethyl ketone38 weight %, and normal butyl acetate 10 weight %.

### Manufacturing example 4: forming of hard coating layer

The hard coating composition prepared in the manufacturing example 2 or the manufacturing example 3 is bar-coated on one surface of the polarizing plate manufactured in the manufacturing example 1 by adjusting the thickness after drying with a Mayer Bar type, being dried at 80°C for 5 minutes, and then being cured with a light intensity of 500mJ/cm² in a high pressure mercury lamp, so the upper polarizing plate and the lower polarizing plate each with the hard coating layer formed on one surface thereof are manufactured.

### Manufacturing example 5: manufacturing of transparent conductive layer

The upper polarizing plate and the lower polarizing plate manufactured in the manufacturing examples 1 to 4 are inserted, and 450W DC power is applied to operate a sputter gun. Next, plasma is induced to an ITO (10wt% Sn doped In₂O₃) target to form a transparent conductive film (90nm). The formed transparent conductive film is ion-treated by operating an ion gun with 50W DC power. Herein, the transparent conductive film is manufactured by maintaining the pressure at 3mTorr at room temperature and supplying argon gas and oxygen gas at 30sccm and 1sccm respectively. At this point, the thickness of the transparent conductive layer is measured by a FT-SEM.

### Manufacturing example 6: manufacturing of alignment film

An alignment solution is coated on the transparent conductive layer of each of the upper polarizing plate and the lower polarizing plate manufactured in the manufacturing example 5 and dried (80°C/2 minutes). Thereafter, UV is incident on the dried alignment solution to manufacture the alignment film.

### Manufacturing example 7: manufacturing of spacer dispersion

A mixed solvent is produced by mixing a ball spacer (SP series, SEKISUI Co.) matching a height of each liquid crystal gap of following examples based on IPA of 100ml. Thereafter, the conductive layer stack of the lower polarizing plate of the manufacturing example 6 is inserted into the spacer spreader (SDSS-KHU02, Shindo Company). The manufactured mixed solvent is spread under a condition of 110°C and then is dried for 20 minutes to form the ball spacer on the alignment film of the lower polarizing plate.

### Manufacturing example 8: manufacturing of sealant layer

A sealant (UVF-006, 70,000 mPa·s, SEKISUI Company) is applied on the alignment film of the lower polarizing plate manufactured in the manufacturing example 6 by using the sealant dispenser (SHOTmini 200Ωx, MUSASHI Company) according to a product size. Thereafter, while the transmission shafts of the upper polarizing plate and the lower polarizing plate are arranged at 0° or 90° in parallel to each other, a liquid crystal is injected into the alignment film of the upper polarizing plate in an ODF process method ODF, and the upper polarizing plate and the lower polarizing plate are bonded to each other. Thereafter, UV curing (500mJ/cm2) is performed along a sealant line.

### Examples 1 to 8 and Comparative examples 1 to 7: Manufacturing of optical stack

According to configurations of following Table 1 and Table 2, the variable transmittance optical stacks for the smart window of the examples 1 to 8 and the comparative examples 1 to 7 are manufactured.

**[Table 1]**

| Division | Example 1 | Example 2 | Example 3 | Example 4 | Example 5 | Example 6 | Example 7 | Example 8 |
|---|---|---|---|---|---|---|---|---|
| First polarizing plate (unit: µm) | 60, TAC | 60, TAC | 60, TAC | 60, TAC | 60, TAC | 60, TAC | 60, TAC | 60, TAC |
| | 21, PVA | 21, PVA | 21, PVA | 21, PVA | 21, PVA | 21, PVA | 21, PVA | 21, PVA |
| | 40, TAC | 40, TAC | 40, TAC | 50, COP | 50, COP | 50, COP | 40, TAC | 40, TAC |
| | HC1 | HC1 | HC1 | HC1 | HC1 | HC1 | HC2 | HC2 |
| Transparent conductive layer | ITO/IM L | ITO/IM L | ITO/IM L | ITO/IM L | ITO/IM L | ITO/IM L | ITO/IM L | ITO/IM L |
| Liquid crystal layer (Liquid crystal / Ball Spacer / Seal) | Alignme nt film | Alignme nt film | Alignme nt film | Alignme nt film | Alignme nt film | Alignme nt film | Alignme nt film | Alignme nt film |
| | Liquid crystal /B. S/S | Liquid crystal /B. S/S | Liquid crystal /B. S/S | Liquid crystal /B. S/S | Liquid crystal /B. S/S | Liquid crystal /B. S/S | Liquid crystal /B. S/S | Liquid crystal /B. S/S |
| | Alignme nt film | Alignme nt film | Alignme nt film | Alignme nt film | Alignme nt film | Alignme nt film | Alignme nt film | Alignme nt film |
| Transparent conductive layer | ITO/IM L | ITO/IM L | ITO/IM L | ITO/IM L | ITO/IM L | ITO/IM L | ITO/IM L | ITO/IM L |
| Second polarizing plate (unit: µm) | HC1 | HC1 | HC1 | HC1 | HC1 | HC1 | HC2 | HC2 |
| | 40, TAC | 40, TAC | 40, TAC | 50, COP | 50, COP | 50, COP | 40, TAC | 40, TAC |
| | 21, PVA | 21, PVA | 21, PVA | 21, PVA | 21, PVA | 21, PVA | 21, PVA | 21, PVA |
| | 40, TAC | 40, TAC | 40, TAC | 40, TAC | 40, TAC | 40, TAC | 40, TAC | 40, TAC |

**[Table 2]**

| Division | Comparati ve example 1 | Comparati ve example 2 | Comparati ve example 3 | Comparati ve example 4 | Comparati ve example 5 | Comparati ve example 6 | Comparati ve example 7 |
|---|---|---|---|---|---|---|---|
| First polarizing plate | 60, TAC | 60, TAC | 60, TAC | 60, TAC | 60, TAC | 60, TAC | 60, TAC |
| | 21, PVA | 21, PVA | 21, PVA | 21, PVA | 21, PVA | 21, PVA | 21, PVA |
| | 40, TAC | 50, COP | 40, TAC | 40, TAC | 40, TAC | 40, TAC | 40, TAC |
| (unit: µm) | - | - | HC1 | HC1 | - | HC2 | HC2 |
| Transparent conductive layer | ITO/IML | ITO/IML | ITO/IML | ITO/IML | ITO/IML | ITO/IML | ITO/IML |
| Liquid crystal layer (Liquid crystal / Ball Spacer / Seal) | Alignment film | Alignment film | Alignment film | Alignment film | Alignment film | Alignment film | Alignment film |
| | Liquid crystal /B. S/S | Liquid crystal /B. S/S | Liquid crystal /B. S/S | Liquid crystal /B. S/S | Liquid crystal /B. S/S | Liquid crystal /B. S/S | Liquid crystal /B. S/S |
| | Alignment film | Alignment film | Alignment film | Alignment film | Alignment film | Alignment film | Alignment film |
| Transparent conductive layer | ITO/IML | ITO/IML | ITO/IML | ITO/IML | ITO/IML | ITO/IML | ITO/IML |
| Second polarizing plate (unit: µm) | - | - | HC1 | - | HC1 | HC2 | HC2 |
| | 40, TAC | 50, COP | 40, TAC | 40, TAC | 40, TAC | 40, TAC | 40, TAC |
| | 21, PVA | 21, PVA | 21, PVA | 21, PVA | 21, PVA | 21, PVA | 21, PVA |
| | 40, TAC | 40, TAC | 40, TAC | 40, TAC | 40, TAC | 40, TAC | 40, TAC |

### Experimental examples

### (1) Pencil hardness

Using a pencil hardness tester (Korea Sukbo Scientific Co.), pencil hardness of the hard coating layer surface of the polarizing plate is measured. The polarizing plate is bonded on glass of 80 x 60mm with the pressure-sensitive adhesive. Thereafter, a pencil (Mitsubishi Co.) is located on the hard coating surface at an angle of 45°, the pencil scratches the surface by applying a weight load of 750g at a speed of 300mm/min, 5 tests are performed per each pencil hardness, the surface is heat-treated at 100°C for 10 minutes, and the pencil hardness is measured based on whether scratches occur with respect to each pencil hardness. The results are described in following Table 3 and Table 4.

### (2) Thickness measurement

The thickness is measured using a thickness gauge (MH-15M, SENDAI NIKON Corporation). Each thickness, height, or width of the hard coating layer of the polarizing plate, liquid crystal gap, and the sealant before and after the formation at the same location is measured, calculated, and checked. The results are described in following Table 3 and Table 4.

### (3) Reliability mandrel evaluation

In order to evaluate bending and crack properties using a cylindrical bending tester (Lab-Q D605, CKSI Co.), an optical stack sample with the bonded upper and lower plates as a size of 100 x 100mm is placed such that each lower polarizing plate is brought into contact with a metal rod with a diameter of 4mm. While each sample is folded, a load of 1 kg is applied to an outer side of the folded portion, each sample is inserted into an oven at 90°C for 2 hours and then left at room temperature, and the folded region is observed to checked whether cracks occur. The results are described in following Table 3 and Table 4.

### <Evaluation criteria>

- No crack: good
- One or more cracks: bad

**[Table 3]**

| Division | Example 1 | Example 2 | Example 3 | Example 4 | Example 5 | Example 6 | Example 7 | Example 8 |
|---|---|---|---|---|---|---|---|---|
| HC pencil hardness of first polarizing plate | 8H | 4H | H | F | B | 3B | 5H | H |
| HC pencil hardness of second polarizing plate | 8H | 4H | H | F | B | 3B | 5H | H |
| HC thickness of first polarizing plate (µm) | 25 | 13 | 5 | 4 | 2 | 1 | 25 | 13 |
| HC thickness of second polarizing plate (µm) | 25 | 13 | 5 | 4 | 2 | 1 | 25 | 13 |
| Sum of HC thickness of first and second polarizing plates (µm) | 50 | 26 | 10 | 8 | 4 | 2 | 50 | 26 |
| Liquid crystal gap thickness (µm) | 2 | 10 | 16 | 16 | 18 | 20 | 12 | 16 |
| Sealant height (µm) | 2 | 10 | 16 | 16 | 18 | 20 | 12 | 16 |
| Sealant width (mm) | 4 | 3 | 3 | 2 | 2 | 2 | 3 | 3 |
| Reliability mandrel evaluation | good | good | good | good | good | good | good | good |

**[Table 4]**

| Division | Comparati ve example 1 | Comparati ve example 2 | Comparati ve example 3 | Comparati ve example 4 | Comparati ve example 5 | Comparati ve example 6 | Comparati ve example 7 |
|---|---|---|---|---|---|---|---|
| HC pencil hardness of first polarizing plate | - | - | 9H | 4H | - | 4B | 8H |
| HC pencil hardness of second polarizing plate | - | - | 9H | - | 4H | 4B | 8H |
| HC thickness of first polarizing plate (µm) | - | - | 28 | 13 | - | 1 | 30 |
| HC thickness of second polarizing plate (µm) | - | - | 28 | - | 13 | 1 | 30 |
| sum of HC thickness of first and second polarizing plates (µm) | - | - | 56 | 13 | 13 | 2 | 60 |
| Liquid crystal gap thickness (µm) | 2 | 2 | 10 | 10 | 10 | 10 | 10 |
| Sealant height (µm) | 20 | 20 | 10 | 20 | 20 | 12 | 12 |
| Sealant width (mm) | 2 | 2 | 4 | 2 | 2 | 2 | 3 |
| Reliability mandrel evaluation | bad | bad | bad | bad | bad | bad | bad |

Referring to the experimental data of the tables 3 and 4, in the case of the examples 1 to 8 in which the variable transmittance optical stack according to the embodiment of the present disclosure is applied, pencil hardness of the hard coating surface of each of the first polarizing plate and the second polarizing plate is measured at 3B to 8H, the sum of the thickness of the first functional coating layer and the thickness of the second functional coating layer is at 2 to 50µm, and the thickness of the liquid crystal layer and the height of the sealant are observed to be the same at 2 to 20µm. On the other hand, in the case of the comparative examples 1 to 7 deviated from the present disclosure, pencil hardness or the sum of the thickness of the first functional coating layer and the thickness of the second functional coating layer is less than or exceeds the range proposed from the present disclosure. Specifically, in the case of the comparative examples 1, 2, 4, and 5 in which both polarizing plates have no hard coating layer, the height of the sealant is observed to be higher than the thickness of the liquid crystal layer. Furthermore, in the case of the comparative example 6, in which pencil hardness of the hard coating surface of the polarizing plate is less than the range proposed from the present disclosure, and the comparative example 7, in which the sum of the thickness of the first functional coating layer and the thickness of the second functional coating layer exceeds 50µm, the thickness of the liquid crystal layer and the height of the sealant are observed to differ from each other. In this case, the reliability of the optical stack may be deteriorated such that light leakage occurs between the liquid crystal layer and other substrates, etc. In the reliability mandrel evaluation, cracks occur in the comparative examples 1 to 7, while no crack is observed in the examples 1 to 8 according to the present disclosure. Specifically, in the case of the comparative example 3 in which pencil hardness and the sum of the thickness of the first functional coating layer and the thickness of the second functional coating layer exceed the range proposed from the present disclosure, even though there is no difference between the thickness of the liquid crystal layer and the height of the sealant, cracks occur.

Therefore, in the variable transmittance optical stack according to the present disclosure and the smart window including the same, the hardness of the first functional coating layer and the hardness of the second functional coating layer satisfy the range from 3B to 8H, and the sum of the thickness of the first functional coating layer and the thickness of the second functional coating layer ranges from 2 to 50µm. Accordingly, the height after the curing of the sealant ranges from 2 to 20µm, so it is possible to secure the height of the sealant the same as the thickness of the liquid crystal layer less than or equal to 20µm. Therefore, it was confirmed that the optical stack has excellent durability with no crack occurring.

### [Industrial Application]

According to the variable transmittance optical stack of the present disclosure, the hardness of the hard coating layer of the polarizing plate, i.e., the functional coating layer satisfies the range from 3B to 8H, and the sum of the thickness of the first polarizing plate and the thickness of the second polarizing plate ranges from 2 to 50µm. Therefore, the height of the sealant is secured at 2 to 20µm to make the height of the sealant equal to the thickness of the liquid crystal to improve the pressing phenomenon and spreading property of the sealant, and light leakage between the liquid crystal layer and other substrates is prevented to maintain an in-plane optical color constant.

## Claims

1. A variable transmittance optical stack comprising:
a liquid crystal layer a sealant;
a first polarizing plate comprising a first functional coating layer and located on one surface of the liquid crystal layer;
a second polarizing plate comprising a second functional coating layer and located on the other surface of the liquid crystal layer;
a first transparent conductive layer provided between the first polarizing plate and the liquid crystal layer; and
a second transparent conductive layer provided between the second polarizing plate and the liquid crystal layer,
wherein at least one of the first transparent conductive layer and the second transparent conductive layer is formed in direct contact with one of the first polarizing plate and the second polarizing plate,
the first functional coating layer and the second functional coating layer have surface pencil hardness ranging from 3B to 8H, and
sum of thickness of the first functional coating layer and the second functional coating layer ranges from 2 to 50µm.

2. The variable transmittance optical stack of claim 1, wherein a height of the sealant after curing ranges from 2 to 20µm.

3. The variable transmittance optical stack of claim 1, wherein a thickness of the first functional coating layer and a thickness of the second functional coating layer range from 1 to 35µm.

4. The variable transmittance optical stack of claim 1, wherein each of the first functional coating layer and the second functional coating layer comprises at least one of the hard coating layer and a low refractive index layer.

5. The variable transmittance optical stack of claim 4, wherein the hard coating layer comprises acrylate-based compounds or epoxy-based compounds.

6. The variable transmittance optical stack of claim 4, wherein the low refractive index layer comprises one or more selected from a group consisting of SiO₂, Al₂O₃, MgF₂, CaF₂, and cryolite.

7. The variable transmittance optical stack of claim 1, wherein at least one of the first transparent conductive layer and the second transparent conductive layer is formed in direct contact with one of the first polarizing plate and the second polarizing plate without a separate or additional substrate between the transparent conductive layer and the polarizing plate.

8. The variable transmittance optical stack of claim 1, wherein at least one of the first transparent conductive layer and the second transparent conductive layer is formed in direct contact with one of the first polarizing plate and the second polarizing plate with a highly adhesive layer between the transparent conductive layer and the polarizing plate.

9. The variable transmittance optical stack of claim 1, wherein at least one of the first transparent conductive layer and the second transparent conductive layer comprises one or more selected from a group consisting of a transparent conductive oxide, metal, carbonaceous material, conductive polymer, conductive ink, and nanowires.

10. The variable transmittance optical stack of claim 1, wherein at least one of the first polarizing plate and the second polarizing plate comprises one or more selected from a group consisting of a protective layer, a retardation matching layer, and a refractive index-matching layer.

11. The variable transmittance optical stack of claim 1, wherein at least one of the first polarizing plate and the second polarizing plate has a thickness ranging from 30 to 200µm.

12. The variable transmittance optical stack of claim 1, wherein the liquid crystal layer comprises one or more of spacers selected from a group consisting of a ball spacer and a column spacer.

13. The variable transmittance optical stack of claim 12, wherein the spacer has a height ranging from 2 to 20µm.

14. The variable transmittance optical stack of claim 12, wherein an occupancy area of the spacer in the liquid crystal layer ranges from 0.01% to 10% of the area of the liquid crystal layer.

15. The variable transmittance optical stack of claim 1, further comprising: one or more selected from a group consisting of a pressure-sensitive adhesive/adhesive layer, an ultraviolet ray absorption layer, and an impact resistance layer.

16. A method for manufacturing the variable transmittance optical stack of any one of claims 1 to 15.

17. A smart window comprising the variable transmittance optical stack of any one of claims 1 to 15.

18. A transportation means comprising the smart window of claim 17.

19. A vehicle in which the smart window of claim 17 is applied to at least one of a front window, a rear window, a side window, a sunroof window, and an inner partition thereof.

20. A wearable device comprising the smart window of claim 17.

21. Windows and doors for a building, the windows and doors comprising the smart window of claim 17.
